(19) Europäisches Patentamt
European Patent Office
Office européen des brevets

(11) **EP 1 425 899 B1**

(12) **EUROPÄISCHE PATENTSCHRIFT**

(45) Veröffentlichungstag und Bekanntmachung des Hinweises auf die Patenterteilung:
**20.02.2013 Patentblatt 2013/08**

(21) Anmeldenummer: **02776669.0**

(22) Anmeldetag: **11.09.2002**

(51) Int Cl.:
***H04M 3/42*** *(2006.01)*

(86) Internationale Anmeldenummer:
**PCT/DE2002/003372**

(87) Internationale Veröffentlichungsnummer:
**WO 2003/024074 (20.03.2003 Gazette 2003/12)**

(54) **ZUTEILUNG TEMPORÄRER ANONYMER RUFNUMMERN IN EINEM TELEKOMMUNIKATIONSNETZ**

METHOD FOR THE PROVISION AND ALLOCATION OF CALL NUMBERS IN A TELECOMMUNICATION NETWORK

PROCEDE DE MISE A DISPOSITION ET D'ATTRIBUTION DE NUMERO DE TELEPHONE DANS UN RESEAU DE TELECOMMUNICATION

(84) Benannte Vertragsstaaten:
**AT BE BG CH CY CZ DE DK EE ES FI FR GB GR IE IT LI LU MC NL PT SE SK TR**

(30) Priorität: **11.09.2001 DE 10144726**

(43) Veröffentlichungstag der Anmeldung:
**09.06.2004 Patentblatt 2004/24**

(73) Patentinhaber: **T-Mobile Deutschland GmbH**
**53227 Bonn (DE)**

(72) Erfinder: **KEHR, Klaus**
**53639 Königswinter (DE)**

(74) Vertreter: **Riebling, Peter**
**Patentanwalt**
**Postfach 31 60**
**88113 Lindau (DE)**

(56) Entgegenhaltungen:
**US-A- 5 590 184    US-B1- 6 327 353**

• **"ETSI TS 100 515 V7.0.0; Digital cellular telecommunications system (Phase 2+); Closed User Group (CUG) Supplementary Services - Stage 1 (GSM 02.85 version 7.0.0 Release 1998)" August 1999 (1999-08) , ETSI XP002230171 Absatz [01.1] Absatz [1.3.1] Annex 1**

EP 1 425 899 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Bereitstellung und Zuteilung von Rufnummern in einem Telekommunikationsnetz nach dem Oberbegriff des Patentanspruchs 1.

Zur Zeit ist einem Teilnehmer eines Mobilfunknetzes genau eine Teilnehmerrufnummer (MSISDN) pro Telinehmeridentitätsmodul (SIM-Karte) zugeordnet. Ist das Mobiltelefon eingeschaltet und keine Rufumleitung oder dergleichen aktiviert, ist er unter dieser Rufnummer für jedermann erreichbar. Aus diesem Grund besteht eine gewisse Gefahr darin, die Rufnummer einem großen, evtl. anonymen Personenkreis zur Kenntnis zu geben, da mit der zunehmenden Verbreitung der Rufnummer auch die Wahrscheinlichkeit für Belästigung oder gar Missbrauch wächst. Insbesondere im Mobilfunk erhält dieser Punkt eine neue Qualität, da hier in der Regel die Telefone ständig mitgeführt werden. Auch im Festnetz besteht dieses Problem, wobei hier jedoch einem Tellnehmeranschluss mehrere Rufnummern zugeordnet werden können, die in der Regel, zumindest teilweise, leichter "geheimgehalten" werden können. Tritt ein Teilnehmer selbst als Anrufer in Erscheinung, kann er in moderneren Kommunikationsnetzen entweder z. B. mittels des Dienstes Rufnummernunterdrückung CLIR (Calling Line Identification Restriction) die Anzeige seiner Rufnummer beim Kommunikationspartner vollständig unterdrücken oder es wird seine (die eine MSISDN) Rufnummer aufgrund des Dienstes Rufnummernanzeige CLIP (Calling Line Identification Presentation) angezeigt. Die Anzeige einer situations- oder zielrufnummernabhängigen Teilnehmer-Identifikationsnummer, unter der der Anrufer dann auch für den Angerufenen erreichbar ist, ist nicht möglich.

Die US 5 590 184 A offenbart ein Verfahren zur Zuteilung einer zufällig ausgewählten, anonymen Rufnummern zu einem Teilnehmer eines Telekommunikationsnetzes, wobei die Rufnummer anstelle der tatsächlichen Telinehmerrufnummer verwendet wird und der Teilnehmer gegenüber anderen Teilnehmern mit dieser anonymen Rufnummer in Erscheinung tritt. Hierbei wird die anonyme Rufnummer jeweils einzeln und individuell einem Teilnehmer zugeordnet.

Ein ähnliches Verfahren ist in der US 6 327 353 A offenbart.

Das Dokument ETSI, TS 100 518, V7.0.0, 1999-08, Digital Cellular Telecommunications System (Phase 2+); Closed User Group (CUG) Supplementary Services - Stage 1 (GSM 02.85 Version 7.0.0 Release 1998 befasst sich mit dem im GSM-Mobilfunksystem angebotenen Zusatzdienst der "geschlossenen Benutzergruppen". Die Mitglieder der Benutzergruppe werden anhand ihrer Rufnummer identifiziert. Eine Bildung und Verwendung von Rufnummernkontingenten jeglicher Art ist nicht beschrieben.

Die Aufgabe der Erfindung liegt darin, ein Verfahren zur Bereitstellung und Zuteilung von Rufnummern in einem Telekommunikationsnetz vorzuschlagen, durch das den Teilnehmern des Kommunikationsnetzes zusätzlich zu den vorhandenen Teilnehmerrufnummern weitere temporäre und anonyme Rufnummern zugeteilt werden können, die die. Gefahr einer unerwünschten Belästigung oder eines Rufnummernmissbrauchs erheblich verringern, oder die nur für bestimmte Zwecke oder Benutzergruppen eingerichtet werden können.

Diese Aufgäbe wird durch die in Anspruch 1 angegebenen Merkmale gelöst. Vorteilhafte Ausgestaltungen und Weiterbildungen der Erfindung sind in den abhängigen Patentansprüchen angegeben.

Das vorgeschlagene Verfahren ermöglicht es einem Teilnehmer eines Teiekommunikationsnetzes, sich aus bestimmten (beispielsweise von verschiedenen Anbietern bereitgestellten) Nummernkontingenten mit temporären, anonymen Rufnummern, im Folgenden auch als TAC-Rufnummern (Temporary Anonymous Connection) bezeichnet, zu versorgen. Dieses ist möglich, ohne neue Verträge mit einem Netzbetreiber oder Provider abzuschließen oder zusätzliche SIM-Karten herauszugeben.

Mit jeder einzelnen TAC-Rufnummer kann ein eigenes Profil verbunden werden, in dem die Art der Erreichbarkeit (z.B. Dienstark : SMS und/oder Telefonie), Erreichbarkeltszelten und die Gültigkeitsdauer und andere Merkmale der TAC-Rufnummer festgelegt werden. Über eine so konfigurierte TAC-Rufnummer ist der Teilnehmer also nur für eine begrenzte Zeitspanne, nur über ausgewählte Dienste und nur zu von ihm festgelegten Tageszeiten erreichbar.

Während der Lebensdauer einer TAC-Rufnummer, kann diese jederzeit, z. B. durch Versenden einer SMS an die Verwaltungsinstanz, ab- und wieder angeschaltet werden. In einer weiteren Ausbaustufe können die Profile noch durch sogenannte "Blacklists" oder "Whitelists" erweitert werden, die bei jedem Anruf dafür sorgen, dass bestimmte Personen die TAC-Rufnummer niemals erreichen können (Blacklist) oder nur ausgewählte Personen die TAC-Rufnummer erreichen können (Whitelist).

Die Nummerkontingente können offen oder geschlossen sein. Dabei bedeutet geschlossen, dass nur Mitglieder der Gruppe (eines Kontingents) untereinander kommunizieren können, während eine TAC-Rufnummer aus einem offenen Kontingent prinzipiell für jeden erreichbar ist. Zusätzlich wird bei Anrufen innerhalb einer geschlossenen Gruppe als Rufnummernanzeige CLI (Calling Line Identification) immer die TAC-Rufnummer des Anrufers anstelle seiner MSISDN angezeigt.

Durch die Wahl eines entsprechenden Präfixes vor der eigentlichen Rufnummer kann der Teilnehmer veranlassen, dass als CLI seine TAC-Rufnummer angezeigt wird.

Die normale Abwicklung des Telefonverkehrs mittels der dem Teilnehmer zugeordneten Teilnehmerrufnummer (z. B. MSISDN) wird von dem Verfahren nicht berührt. D. h. unabhängig davon, ob eine temporäre TAC-Rufnummer benutzt wird, ob sie gesperrt ist oder nicht, ist der Teilnehmer unter seiner MSISDN ganz normal erreichbar und kann auch jederzeit alle Dienste nutzen. Auch die Nutzung des Features CLIR (Rufnummernunterdrückung) funktioniert uneingeschränkt auch für die TAC-Rufnummern.

Ein Teilnehmer kann also nun für bestimmte Zwecke eine konfigurierbare und abschaltbare TAC-Rufnummer weitergeben, ohne das seine MSISDN bekannt wird. Dadurch wird die Gefahr von Missbrauch und Belästigung des Teilnehmers erheblich reduziert. Mit der Einrichtung von Black- und Whitelists können bestimmte Anrufer von vornherein ausgeschlossen werden.

Die Vorteile des Verfahrens liegen auf der Hand. Durch eine zugeteilte TAC-Rufnummer wird die Anonymität des Teilnehmers gewahrt, da die TAC-Rufnummer nur eine temporäre Gültigkeit hat und nicht in einem Telefonverzeichnis geführt wird. Der Teilnehmer kann sich jederzeit eine oder mehrere TAC-Rufnummern zuteilen lassen, ohne dass er einen neuen Teilnehmervertrag oder eine neue SIM benötigt. Über Online-Schnittstellen kann der Teilnehmer seine TAC-Rufnummern konfigurieren.

Für den Netzbetreiber ist die Einrichtung und Vergabe der TAC-Rufnummern relativ einfach umsetzbar.

Nachfolgend wird ein bevorzugtes Ausführungsbeispiel der Erfindung anhand der Zeichnungsfigur erläutert. Hierbei ergeben sich weitere Merkmale, Vorteile und Anwendungen der Erfindung. Im Beispiel wird die Anwendung des Verfahrens in einem Mobilfunknetz beschrieben. Die Anwendung in einem Festnetz ist auf ähnliche Weise realisierbar.

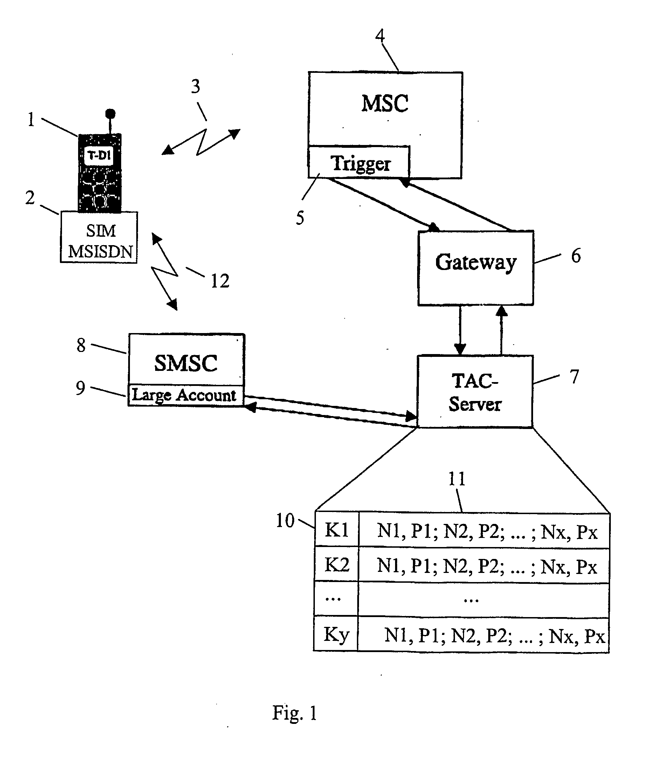

Figur 1 zeigt beispielhaft die technischen Komponenten zur Realisierung des erfindungsgemäßen Verfahrens.

Vergabe der Nummernkontinaente

Die Nummernkontingente 10 werden durch den Netzbetreiber oder gegebenenfalls andere Anbieter vergeben. D. h. der Netzbetreiber legt fest, wieviele Kontingente 10 es gibt und wieviele TAC-Rufnummern 11 jedes Kontingent enthält. Die Kontingente 10 werden einer oder mehreren Verwaltungsinstanzen (TAC-Servern) 7 zugeteilt, die dann für die Abwicklung des Dienstes zuständig sind. Die Verwaltungsinstanzen sind z. B. über ein Gateway 6 an das Mobilfunknetz, hier vereinfacht dargestellt durch eine Vermittlungsstelle 4, angebunden. Dabei muss der Netzbetreiber sicherstellen, dass jede Verwaltungsinstanz 7 die Verbindungsdaten für alle Transaktionen erhält, die von ihm verwaltete Kontingente betreffen. Dies kann bei Telefonie beispielsweise durch Einrichtung von Triggern 5 in den Vermittlungsstellen (MSC) 4 und beim Kurznachrichtendienst durch sogenannte Large-Accounts 9 in der Kurnachrichtenzentrale (SMSC) 8 geschehen. Um diese Einrichtungen beim Netzbetreiber zu ermöglichen, müssen die TAC-Rufnummern daher einem Nummernschema genügen, das immer eine eindeutige Zuordnung der TAC-Rufnummer zu dem zugehörigen Kontingent erlaubt.

Beispielsweise können alle TAC-Rufnummern N1; ... ; Nx aus Kontingent K1 mit 111, aus Kontingent K2 mit 222, usw., beginnen, so dass eine eindeutige Zuordnung möglich ist. Auf diese Weise könnten allerdings, wegen der begrenzten Anzahl möglicher Trigger 5, nur relativ wenige Kontingente K1; ... ; Ky eingerichtet werden.

Am Vorteilhaftesten erscheint hier ein mehrstufiges Schema, bei dem eine speziell für diesen Dienst bereitgestellte Verwaltungsinstanz 7 zunächst die Daten aller Transaktionen erhält, die diesen Dienst betreffen. Diese Verwaltungsinstanz kann dann entweder im Bedarfsfall die Verteilung der Kontingente 10 und TAC-Rufnummern 11 an weitere Verwaltungsinstanzen regeln oder auch die weitere Bearbeitung selbst übernehmen.

Die TAC-Rufnummern 10 wären dann etwa nach folgendem Schema aufgebaut:

$$N = t_1...t_a \; k_1...k_b \; n_1...n_c \,,$$

wobei,

$t_1...t_a$: eindeutige Kennung des Dienstes
$k_1...k_b$: eindeutige Kennung des Kontingents K
$n_1...n_c$: eindeutige Rufnummer (nur innerhalb des Kontingents $k_1...k_b$

Registrierung von Teilnehmern für Kontingente

Nach dem Zuschneiden der Kontingente 10 erfolgt die Verteilung der TAC-Rufnummern 11 an Teilnehmer. Dazu wird jeder TAC-Rufnummer 11 aus einem Kontingent eindeutig die MSISDN des Teilnehmers zugeordnet, insbesondere kann daher jeder Teilnehmer nur maximal eine TAC-Rufnummer aus einem Kontingent erhalten. Weitere TAC-Rufnummer aus anderen Kontingenten können jedoch zugeteilt werden.

Für die Zuordnung von MSISDN zu TAC-Rufnummer sind prinzipiell zwei Verfahren möglich:

- individuelle Zuordnung:

    Der Teilnehmer möchte sich für ein bestimmtes Kontingent K1 registrieren, weiss aber nicht, ob dort noch TAC-Rufnummern frei sind. (Er hat beispielsweise in Zeitung/TV/Radio/... davon erfahren). Mit seinem Mobiltelefon 1 schickt er z. B. eine Registrierungs-SMS 12 an eine entsprechende Servicenummer (alternativ: per Anruf, Email, Web-Interface,...), die an die zuständige Verwaltungsinstanz 7 weitergeleitet wird. Wenn noch TAC-Rufnummern in dem Kontingent K1 frei sind, erhält er eine Bestätigung mit Angabe seiner TAC-Rufnummer.

- kollektiv Zuordnung:

    Der Teilnehmer erhält eine bestimmte TAC-Rufnummer (beispielsweise vom Veranstalter einer Telefonparty auf einem Button zum Anstecken zusammen mit der Eintrittskarte), die er dann zur Aktivierung in einer Registrierungs-SMS an eine entsprechende Servicenummer sendet (alternativ: per Anruf, Email, Web-Interface,...).

Konfiguration der Profile

Mit jeder TAC-Rufnummer N ist ein Profil R verknüpft, in dem z. B. die folgenden Merkmale festgelegt werden können:

- Erreichbarkeitsintervalle
    Der Teilnehmer kann festlegen, zu welchen Tageszeiten er über die TAC-Rufnummer erreichbar sein will. (z. B. Montag bis Freitag von 18:00 bis 21:00 Uhr)
- Dienstart
    Der Teilnehmer kann festlegen, ob er über seine TAC-Rufnummer nur für SMS, nur für Telefonie oder für beides erreichbar sein will
- Blacklist
    Der Teilnehmer kann festlegen, welche Absender (definiert über TAC-Rufnummern oder MSISDN) seine TAC-Rufnummern nicht erreichen sollen
- Whitelist
    Der Teilnehmer kann festlegen, welche Absender (definiert über TAC-Rufnummern oder MSISDN) seine TAC-Rufnummern ausschließlich erreichen sollen

Weitere Ausprägungen der Profile sind denkbar.

Die Bearbeitung der Profile R erfolgt idealerweise über ein Web-Interface. Alternativ ist auch der Anruf einer Service-Nummer, Versenden von entsprechenden SMS oder Emails denkbar.

An-/Abschalten / Umkonfiguration

Damit der Teilnehmer jederzeit in der Lage ist, die Erreichbarkeit über seine TAC-Rufnummer zu aktivieren/deaktivieren wird eine SMS-Schnittstelle angeboten.

Mit seinem Mobiltelefon 1 schickt er eine Änderungs-SMS 12 (zur Aktivierung/Deaktivierung) an eine entsprechende Servicenummer (alternativ: per Anruf, Email, ....). Die Erreichbarkeit seiner TAC-Rufnummer wird entsprechend geändert.

Ebenso kann die Aktivierung/Deaktivierung nur für einzelne Dienste (nur für SMS/Telefonie) durchgeführt werden.

Alternativ zu der vorgeschlagenen Konfiguration durch SMS ist auch Anruf, Email, Web-Interface nutzbar.

Nutzung der TAC Rufnummer

a. Für ankommende (MT: Mobile Terminated)-SMS und ankommende (MT) Anrufe:

Möchte ein Telefonteilnehmer A mit der MSISDN$_A$ die TAC-Rufnummer N$_B$ eines Teilnehmers B mit der MSISDN$_B$ für einen Dienst benutzen (Anruf, SMS), sind folgende Fälle zu beachten:

- die TAC-Rufnummer N$_B$ gehört zu einem geschlossenen Kontingent K Teilnehmer A kann den Dienst für Teilnehmer B nur benutzen, wenn er ebenfalls für das Kontingent K registriert ist. Dadurch hat er die TAC Rufnummer N$_A$ erhalten. Wenn das für N$_B$ konfigurierte Profil R es zulässt, kann der Dienst benutzt werden, d. h. der Teilnehmer B erreicht werden. Als Rufnummer des Absenders wird N$_A$ angezeigt.
- die TAC-Rufnummer N$_B$ gehört zu einem offenen Kontingent K Teilnehmer A kann den Dienst für Teilnehmer B in jedem Fall benutzen, wenn das für N$_B$ konfigurierte Profil R es zulässt. Als Rufnummer des Absenders wird angezeigt:
- die MSISDN$_A$, wenn Teilnehmer A die Rufnummer von Teilnehmer B ohne weiteren Präfix gewählt hat
- die TAC-Rufnummer N$_A$, wenn A für das Kontingent K registriert ist, dort die TAC-Rufnummer N$_A$ bekommen hat und durch die Wahl eines entsprechenden Präfixes die Anzeige dieser Rufnummer veranlasst hat (siehe oben)
- unabhängig von der Registrierung für das Kontingent K und dem mit N$_B$ verbundenen Profil R, kann die MSISDN$_B$ immer uneingeschränkt benutzt werden.
- Sollte Teilnehmer A das Feature CLIR aktiviert haben, wird seine Rufnummer in keinem Fall (weder TAC-Rufnummer noch MSISDN) angezeigt.

Für abgehende (MO: Mobile Originated)-SMS und angehende Anrufe

Möchte ein Telefonteilnehmer A, dass seine TAC-Rufnummer als CLI eingeblendet wird (unabhängig davon, ob es sich um ein geschlossenes oder offenes Kontingent K handelt), wird folgende Vorgehensweise gewählt.

Der Teilnehmer wählt als Präfix die Kennung des Dienstes $t_1,..,t_a$ gefolgt von der Kennung des Kontingents $k_1...k_b$, dann ein Sonderzeichen (z. B. #), gefolgt von der Zielrufnummer (TAC-Rufnummer oder MSISDN). Auf diese Weise erfolgt ein Routing des Dienstes über die Verwaltungsinstanz 7 (TAC-Server), die dann die TAC-Rufnummer des Teilnehmers aus dem entsprechenden Kontingent K einsetzen kann (sofern der Teilnehmer für das Kontingent registriert ist). Alternativ ist auch die Nutzung einer eigenen Servicenummer für dieses Feature denkbar.

Abrechnungsmöglichkeiten

Für die Abrechnung des Dienstes gibt es mehrere Möglichkeiten:

- die einfachste Variante ist die Einrichtung eines generellen Tarifs für die Service-Nummer. Alle Anrufe zu einer TAC-Rufnummer werden dann auf die gleiche Weise vergebührt
- zusätzlich könnte der TAC-Server 7 Vergebührungstickets (VAS-Tickets) erzeugen, um Gebühren für die Nutzung des Dienstes zu erheben Auch die Einrichtung eines wesentlich feineren Tarifmodells ist denkbar. Beispielsweise könnten für jedes Kontingent K eigene Gebührensätze eingerichtet werden.

Die Anwendungen des erfindungsgemäßen Verfahrens sind vielfältig. Hier einige Beispiele.

Bei Annoncen: Der Teilnehmer kann in einer Annonce bedenkenlos seine TAC-Rufnummer angeben und ist dann nur zu den konfigurierten Zeiten erreichbar. Nach erfolgreichem Abschluss wird die TAC-Rufnummer gesperrt und es erfolgen keine weiteren Anrufe. Niemand kann über Telefonverzeichnisse o. dgl. die Identität des Anbieters ermitteln. Die Verwendung der Erfindung ist hier eine gute Alternative zu Chiffre-Diensten.

Bei Veranstaltungen und Messen: Während der Veranstaltung sind Betreuer/Berater/Verkäufer permanent erreichbar. Mit Abschluss der Veranstaltung verlieren die TAC-Rufnummern ihre Gültigkeit.

Bei SMS-/Telefonparties: Jeder Teilnehmer erhält vom Veranstalter eine TAC-Rufnummer, die er bedenkenlos deutlich sichtbar tragen kann. Während der Party (und vielleicht noch einige Zeit länger) ist er unter dieser TAC-Rufnummer erreichbar. Danach nicht mehr. Sollte er schon während der Veranstaltung keine weiteren Kontakte mehr wünschen, kann der Dienst jederzeit deaktiviert werden.

**Liste der Bezugszeichen**

| 1 | Mobilstation |
|---|---|
| 2 | SIM (mit MSISDN) |
| 3 | Anruf |
| 4 | Vermittlungsstelle (MSC) |
| 5 | Trigger |
| 6 | Gateway |
| 7 | Verwaltungsinstanz (TAC-Server) |
| 8 | Kurznachrichtenzentrale (SMSC) |
| 9 | Large Account |
| 10 | Nummernkontingent |
| 11 | TAC-Rufnummern + Rufnummernprofil |
| 12 | Kurznachricht |

**Patentansprüche**

1.  Verfahren zur Bereitstellung und Zuteilung von Rufnummern in einem Telekommunikationsnetz, wobei die Rufnummern zusätzlich zu den vorhandenen Teilnehmerrufnummern den Teilnehmern des Telekommunikationsnetzes zugeteilt werden, mit den Schritten:

    - Bereitstellung einer Vielzahl von temporären, anonyme TAC-Rufnummern (11) enthaltenden Nummernkontingenten (10);
    - Zuordnung der Nummernkontingente (10) zu mindestens einer Verwaltungsinstanz (7);
    - Individuelle oder kollektive Zuteilung der TAC-Rufnummern (11) der Nummernkontingente (10) durch die Verwaltungsinstanz (7) an die Teilnehmer, indem eine TAC-Rufnummer (11) eines Kontingents (10) auf Anforderung genau einer vorhandenen Teilnehmerrufnummer zugeteilt wird, **dadurch gekennzeichnet,**

    **dass** die Kontingente (10) geschlossene Kontingente sind, deren TAC-Rufnummern (11) nur für andere TAC-Rufnummern desselben Kontingents erreichbar sind, wobei bei Anrufen innerhalb eines geschlossenen Kontingents (10) als Rufnummernanzeige immer die TAC-Rufnummer (11) des Anrufers angezeigt wird.

2.  Verfahren nach Anspruch 1, **dadurch gekennzeichnet, dass** jeder einzelnen TAC-Rufnummer (11) ein eigenes Rufnummernprofil zugeordnet wird, in welchem durch den Teilnehmer und/oder den Anbieter die Dienstart, die Erreichbarkeitszeiten und die Gültigkeitsdauer der TAC-Rufnummer (11) festgelegt werden.

3.  Verfahren nach einem der Ansprüche 1 oder 2, **dadurch gekennzeichnet, dass** die Verwaltungsinstanz (7) an das Telekommunikationsnetz angebunden ist und von diesem mit den Verbindungsdaten der einzelnen TAC-Rufnummern (11) der von ihnen jeweils verwalteten Kontingente (10) versorgt wird.

4.  Verfahren nach einem der Ansprüche 1 bis 3, **dadurch gekennzeichnet, dass** die TAC-Rufnummern (11) einem Nummernschema genügen, das der Verwaltungsinstanz (7) und den Einrichtungen (4, 5, 8, 9) des Telekommunikationsnetzes eine eindeutige Zuordnung einer TAC-Rufnummer (11) zu einem Kontingent (10) erlaubt

**5.** Verfahren nach einem der Ansprüche 1 bis 4, **dadurch gekennzeichnet, dass** jederzeit eine Einrichtung, eine Konfiguration und eine Aktivierung/ Deaktivierung der TAC-Rufnummern (11) durch den Teilnehmer durchführbar ist.

**6.** Verfahren nach einem der Ansprüche 1 bis 5, **dadurch gekennzeichnet, dass** als Telekommunikationsnetz ein Mobilfunknetz verwendet wird.

**Claims**

**1.** Method for the supply and allocation of telephone numbers in a telecommunications network, the telephone numbers being allocated to the subscribers of the telecommunications network in addition to the existing subscriber telephone numbers, having the steps of:

- supply of a plurality of temporary number contingents (10) containing anonymous TAC telephone numbers (11);
- assignment of the number contingents (10) to at least one administrative body (7);
- individual or collective assignment of the TAC telephone numbers (11) of the number contingents (10) by the administrative body (7) to the subscribers, by allocating a TAC telephone number (11) of a contingent (10) on request exactly to an existing subscriber telephone number, **characterised in that**

the contingents (10) are closed contingents of which the TAC telephone numbers (11) can be reached only by other TAC telephone numbers of the same contingent, wherein, in case of calls within a closed contingent (10), the TAC telephone number (11) of the caller is always displayed as the telephone number display.

**2.** Method according to claim 1, **characterised in that** each individual TAC telephone number (11) is assigned its own telephone number profile in which the type of service, the availability times and the period of validity of the TAC telephone number (11) are fixed by the subscriber and/or the provider.

**3.** Method according to one of claims 1 or 2, **characterised in that** the administrative body (7) is linked to the telecommunications network and is supplied by the latter with the connection data of the individual TAC telephone numbers (11) of the contingents (10) administered by them at any given time.

**4.** Method according to one of claims 1 to 3, **characterised in that** the TAC telephone numbers (11) conform to a number scheme which allows the administrative body (7) and the facilities (4, 5, 8, 9) of the telecommunications network to assign a TAC telephone number (11) uniquely to a contingent (10).

**5.** Method according to one of claims 1 to 4, **characterised in that** set-up, configuration and activation/ deactivation of the TAC telephone numbers (11) can be carried out by the subscriber at any time.

**6.** Method according to one of claims 1 to 5, **characterised in that** a mobile telephone network is used as the telecommunications network.

**Revendications**

**1.** Procédé de mise à disposition et d'attribution de numéros d'appel dans un réseau de télécommunication, étant précisé que les numéros d'appel sont attribués aux abonnés du réseau de télécommunication en plus des numéros d'appel d'abonné existants, avec les étapes suivantes :

- mise à disposition de plusieurs contingents temporaires de numéros (10) contenant des numéros d'appel temporaires anonymes TAC (11) ;
- affectation des contingents de numéros (10) à au moins une instance de gestion (7) ;
- attribution individuelle ou collective, par l'instance de gestion (7), des numéros d'appel TAC (11) des contingents de numéros (10) aux abonnés, un numéro d'appel TAC (11) d'un contingent (10) étant attribué à la demande exactement à un numéro d'appel d'abonné existant,

**caractérisé en ce que** les contingents (10) sont des contingents fermés dont les numéros d'appel TAC (11) ne peuvent être joints que par d'autres numéros d'appel TAC du même contingent, étant précisé que lors d'appels à l'intérieur d'un contingent (10) fermé, c'est toujours le numéro d'appel TAC (11) de l'appelant qui s'affiche.

**2.** Procédé selon la revendication 1, **caractérisé en ce qu'**on affecte à chaque numéro d'appel TAC (11) individuel son propre profil de numéro d'appel, dans lequel l'abonné et/ou le fournisseur fixe le type de service, les heures où l'abonné peut être joint et la durée de validité du numéro d'appel TAC (11).

**3.** Procédé selon l'une des revendications 1 ou 2, **caractérisé en ce que** l'instance de gestion (7) est reliée au réseau de télécommunication, lequel fournit à ladite instance (7) les données de connexion des numéros d'appel TAC (11) individuels des contingents (10) gérés respectivement par eux.

**4.** Procédé selon l'une des revendications 1 à 3, **caractérisé en ce que** les numéros d'appel TAC (11) répondent à un schéma de numéros qui permet à l'instance de gestion (7) et aux dispositifs (4, 5, 8, 9) du réseau de télécommunication une affectation univoque d'un numéro d'appel TAC (11) à un contingent (10).

**5.** Procédé selon l'une des revendications 1 à 4, **caractérisé en ce qu'**à tout moment, une installation, une configuration et une activation/désactivation des numéros d'appel TAC (11) par l'abonné sont possibles.

**6.** Procédé selon l'une des revendications 1 à 5, **caractérisé en ce qu'**on utilise comme réseau de télécommunication un réseau de téléphonie mobile.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5590184 A

- US 6327353 A